# EUROPEAN PATENT APPLICATION

(11) **EP 4 086 734 A1**
(43) Date of publication of application: **09.11.2022**
(21) Application number: 22168097.8
(22) Date of filing: 13.04.2022
(51) Int. Cl.: G06F 3/01

(54) **A TRACKING METHOD FOR IMAGE GENERATION, A COMPUTER PROGRAM PRODUCT AND A COMPUTER SYSTEM**

(30) Priority: 04.05.2021 US 202117307197
(71) Applicant: Varjo Technologies Oy, 00100 Helsinki (FI)
(72) Inventor: Miettinen, Ville, Helsinki (FI); Strandborg, Mikko, Hangonkylä (FI)
(74) Representative: Aaltonen, Janne Lari Antero

(57) **Abstract**

A tracking method for tracking a target in a VR/AR system (1) having a tracker function for determining the position of the target, is disclosed, comprising obtaining a stream of images of the target, placing two or more markers (22) in determined positions on the target in the image said markers being arranged to follow the movement of the determined positions, detecting the movement of the markers between two images in the stream of images, if the detected movement is within a set of consistency criteria, determining the position of the target based on the detected movement, and if the detected movement is outside the set of consistency criteria, activating the tracker function. This reduces the computation power required for tracking.

## Description

### TECHNICAL FIELD

The present disclosure relates to a tracking method for use in a virtual reality (VR) or augmented reality (AR) system, a computer program product for performing the tracking method and a computer system in which the method may be performed.

### BACKGROUND

In a typical virtual reality/augmented reality (VR/AR) system there is one camera per eye, each running at, for example, 200 Hz. To ensure proper projection of the image, a tracker algorithm is provided for constantly tracking the position of the eye. This tracking function typically requires about 1 ms per frame of the image, which means that as much as approximately 50 % of the processing capacity may be spent on the tracking function, thus significantly increasing the processing capacity required in the system.

It is known in the art to optimize trackers by running them in two different modes: a "global" tracker for roughly locating the tracked objects (such as pupil and glints in gaze tracking) - this is often performed in a lower resolution - and a "local" or "incremental" tracker for obtaining the subpixel accurate target coordinates. In the latter the processing of the camera data is limited to a smaller crop rectangle surrounding the tracked objects. While the split to global and local tracking significantly reduces the amount of work that needs to be performed every frame, the tracking costs are still substantial.

### SUMMARY

An object of the present disclosure is to enable tracking of a target in a VR/AR system with reduced tracking overhead.

The disclosure therefore relates to a tracking method for tracking a target in a VR/AR system having a tracker function for determining the position of the target, the method comprising the steps of
obtaining a stream of images of the target,
placing two or more markers in determined positions on the target in the image said markers being arranged to follow the movement of the determined positions,
detecting the movement of the markers between two images in the stream of images,
if the detected movement is within a set of consistency criteria, determining the position of the target based on the detected movement, and
if the detected movement is outside the set of consistency criteria, activating the tracker function.

The proposed method is able to track small, consistent movements in a simpler way than the conventional trackers used in VR/AR systems. Consistent movement means that all markers move in essentially the same direction and by the same amount. At the same time, the method is arranged to recognize larger and/or inconsistent movements for which the method is not suitable and activate the conventional tracking function in such cases. In this way, the method proposed in the present disclosure reduces the average CPU consumption required for tracking by recognizing that for a significant fraction of the time the tracked target will be immobile or moving only very little. In the instances of very little movement, the markers will provide sufficient information about the target's movement with a method requiring much less computing power than the conventional trackers. When the movement becomes too great, the method will recognize this and will activate the conventional tracker function. In this way, situations where the tracked objects exhibit minimal motion can be detected and, and in these cases the regular tracking pipeline may be bypassed.

For eye tracking, for example, it has been found that the eye tends to focus for a period of time in which there is very little movement, then move quite rapidly to a new position and again focus for a period of time. Trial runs with gaze tracking data show that the pupil and glint motion is less than 1 pixel in VGA resolution in approximately 90% of the frames in typical usage patterns, which means that the conventional trackers only need to be used for a small fraction of the total time.

The disclosure also relates to a computer program product comprising computer-readable code means which when run in a processor will cause the processor to perform the method according to the present disclosure. The code means is preferably stored on a non-transitory storage medium. The disclosure also relates to a computer comprising a processor and a program memory, the program memory holding such a computer program product so that it can be executed in the processor.

### BRIEF DESCRIPTION OF DRAWINGS

Embodiments of the present disclosure will now be described, by way of example only, with reference to the following diagrams wherein:
Fig. 1 is a schematic overview of a VR/AR system.
Fig. 2 is an example image of an eye with markers that may be used in methods according to the present disclosure; and
Fig. 3 is a flow chart of a method according to embodiments of the present disclosure

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. In the following, a tracking method will be discussed using the eye's movements as an example.

The disclosure relates to a tracking method for tracking a target in a VR/AR system having a tracker function for determining the position of the target, the method comprising the steps of
obtaining a stream of images of the target,
placing two or more markers in determined positions on the target in the image said markers being arranged to follow the movement of the determined positions,
detecting the movement of the markers between two images in the stream of images,
if the detected movement is within a set of consistency criteria, determining the position of the target based on the detected movement, and
if the detected movement is outside the set of consistency criteria, activating the tracker function.

Conventionally, a VR/AR system includes a tracker function for tracking the positions of the eyes, for the purposes of image rendering. Since the eye can move both laterally and rotationally, the tracking method must be able distinguish between the two types of movement. The VR/AR system typically also includes a number of light sources arranged to provide light signals that will be reflected in various positions on the eye, the reflections being known as glints. If this is the case, the determined positions may also include one or more positions of glints to supplement the boundary markers. The glints are usually given different shapes and/or orientations such that they can be distinguished from each other for reliable tracking. The glints to be used according to the present disclosure are preferably selected with distinguishable shapes and orientations to facilitate tracking.

The present disclosure is based on two observation. First, tracking targets usually exhibit patterns of long periods of almost zero motion. For gaze tracking, for example, this occurs when the user focuses on target, in which case only micro saccades affect the pupil. In between there will be short-term rapid transitions (saccades) to a new target location. Also, if the eye's movement is very small, it can be treated as a near-rigid movement, which may be modelled using affine transformations. This means that if the pupil ellipse for the previous frame is known, the motion vectors for a few points on its boundary will be sufficient information to produce the ellipse for the current frame with sufficient accuracy without actually having to extract the entire pupil from the camera data. The same applies to the glint reflections used in gaze tracking

The movement may be detected between two consecutive images in the stream of images, or between images that are further apart in the stream of images.

The method may further comprise the steps of copying the content of a number of pixels adjacent each marker and using said content to detect the movement.

According to preferred embodiments each marker is positioned in a determined position where there is a marked contrast between the determined position and its surroundings, which will facilitate the detection.

The set of consistency criteria may include a maximum movement of the marker between the two images. Additionally, or alternatively, the set of consistency criteria may include the directions of movement of at least two markers.

In important embodiments, target is an eye and the determined positions are selected to reflect a lateral and/or rotational movement of the eye. In such embodiments the determined positions may include one or more positions on the boundary of the pupil and/or the iris of the eye. For example, the determined positions may include at least three positions on the boundary of the pupil or the iris.

The disclosure also relates to a computer program product arranged to perform the method according to the present disclosure and a computer comprising such a program for being run in the computer.

### DETAILED DESCRIPTION OF DRAWINGS

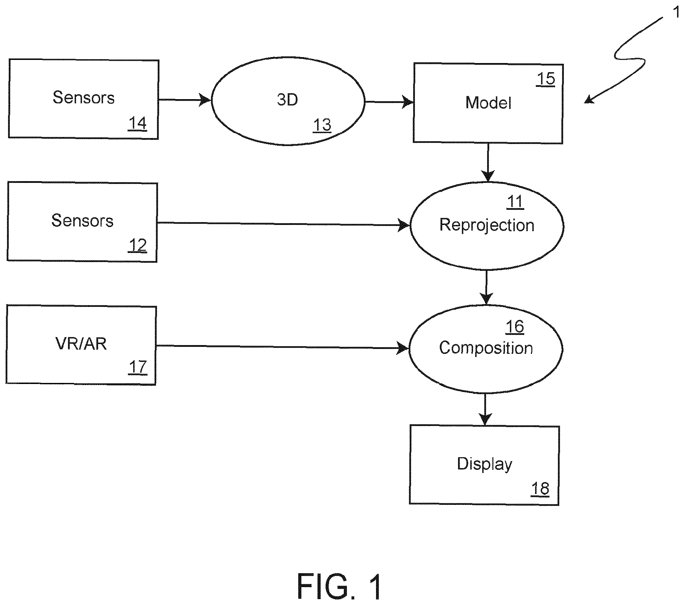

Fig. 1 is a schematic overview of a VR/AR system 1, including the components typically present in such a system.

A reprojection subsystem 11 is arranged to receive an image stream from one or more sensors 12. The sensors typically include cameras, such as VST cameras, and at least one sensor arranged to provide depth data, such as a LIDAR or ToF sensor. The data received from the sensors are used to reproject an image stream including color and depth information from a source position corresponding to the position of the camera, to a target position which is normally the position of the user's eye. Reprojection is used to account for movements of the user's head and also for the difference in positions of the source position and the target position, that is, the camera's position and the location of the user's eye. Methods of tracking the user's head and eye movement are well known in the art but require a lot of computational power. The present disclosure proposes a method of handling small eye movements without involving the conventional tracker function, so that small eye movements can be compensated for with less computational overhead. This will be discussed in more detail below.

As is common in the art, the system also comprises a 3D reconstruction subsystem 13 arranged to receive input from various types of sensors 14 and create a 3D reconstruction 15 in the form of an accumulated point cloud or a set of mesh and color information. The 3D reconstruction is kept in a memory unit in, or accessible from, the system. As is known in the art, the sensors 14 providing input to the 3D reconstruction subsystem may include ToF, Lidar, VST cameras, IR cameras and any other suitable source of image and depth information.

A composition subsystem 16 is arranged in a conventional way to receive the reprojected image stream from the reprojection subsystem and VR/AR content generated in any suitable way by a VR/AR content generating unit 17 and to generate the composite image stream by combining the reprojected image stream and the VR/AR content.

The system comprises a display unit 18, which may be a head-mounted display, on which the composite image stream may be displayed.

The final image stream is projected on a VR/AR display, typically a head-mounted display in a manner known in the art.

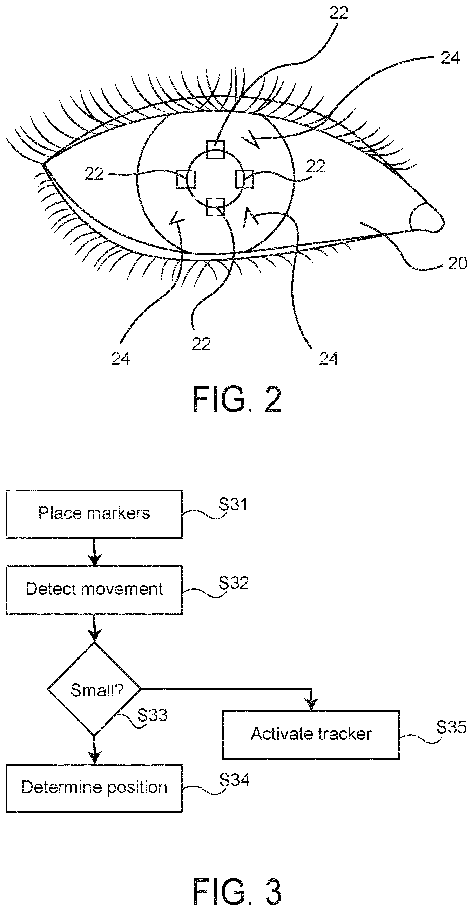

Fig. 2 shows schematically an image of an eye 20 as seen inside a VR headset. A number of markers, referred to as boundary markers 22, are positioned on the boundary of the pupil, or the border between the pupil and the iris. A number of markers 24 are also positioned on glints. These will be referred to as glint markers to distinguish them from the boundary markers. Figure 2 shows four boundary markers 22 and three glint markers 24. As explained above, glints are reflections of light signals generated by the VR/AR system and the glint markers are preferably selected so that their shape and/or orientation facilitate the tracking.

In preferred embodiments markers are used both on the boundary of the pupil or iris, referred to as boundary markers 22 and on one or more glints, referred to as glint markers 24. The markers on the boundary of the pupil or iris may suitably be substantially evenly distributed around the circumference, for example 4 markers with approximately 90 degrees between them as shown in Figure 2. The glints on which glint markers should be placed are preferably selected to complement each other and the boundary markers by selecting locations in different areas. The markers are in some embodiments rectangular shapes. The number of markers required for a satisfactory result will be dependent on the image quality.

The step of determining the positions of the markers may be performed in any suitable way. A simple method is outlined here: For ellipses, such as pupils, scanning the perimeter of the previously tracked ellipse, and locate four spots sufficiently far from each other that have locally maximum contrast at the boundaries. For glints, glints having a shape that allows their orientation to be determined, such as V shaped glints may be selected and tracking rectangles may be positioned at the vertices of a few of the glints. The total number of markers should be high enough to ensure a sufficiently reliable tracking, preferably greater than the number of degrees of freedom in the affine matrix. A total of, for example 8 markers may be used per eye.

Fig. 3 is a flow chart of a method that may be used for tracking markers in an image stream. In a first step S31 a number of markers are positioned on a target, the position of which should be monitored. In step S32, the movement of the markers is detected. Step S33 is a decision step. If the detected movement is smaller than a determined threshold, the position of the target is determined based on the detected movement, in step S34. If the detected movement exceeds the determined threshold, the tracker function of the system is activated in step S35. The movement is preferably detected between two consecutive frames in the image stream but may be detected for frames having a certain spacing between them, such as every second, third or fourth frame. The threshold is typically related to the magnitude of the movement but may also include criteria such as whether the markers all move in substantially the same direction and by the same magnitude. If this is not the case, the tracker should be activated to ensure proper detection of the target's position.

In general, the trackers should be placed in high-contrast areas so that a small movement will be detectable as a significant change in colour and/or brightness. Usually, it will be feasible to position trackers on the boundary of the tracked target.

The motion of the markers may also be detected in step S32 by any suitable algorithm that is able to locate short distance motion vectors with a sufficient accuracy. By way of example, a short distance may be for example smaller than 1.5 pixels and an accuracy of approximately 1/32th of a pixel may be considered sufficient. A number of high-quality motion vector estimators are available on the market.

The next step, for the decision step S33, is to build the transformation matrix. This may be done using procedures that are well known to the skilled person. One suitable way, if there are more markers than degrees of freedom in the affine matrix, that is at least four markers for the pupil, is by performing a polyfit of the motion vectors. If the fit error is within an acceptable range, the movement can be determined by a near rigid transformation as discussed above. If the fit error is greater than the threshold, the fit is rejected, and the procedure continues with step S35, in which the actual tracker is activated. The same process is repeated for the glints.

## Claims

1. A tracking method for tracking a target in a VR/AR system (1) having a tracker function for determining the position of the target, the method comprising
obtaining a stream of images of the target,
placing two or more markers (22) in determined positions on the target in the image said markers being arranged to follow the movement of the determined positions,
detecting the movement of the markers between two images in the stream of images,
if the detected movement is within a set of consistency criteria, determining the position of the target based on the detected movement, and
if the detected movement is outside the set of consistency criteria, activating the tracker function.

2. A tracking method according to claim 1 wherein the movement is detected between two consecutive images in the stream of images.

3. A tracking method according to claim 1 or 2, further comprising the steps of copying the content of a number of pixels adjacent each marker (22) and using said content to detect the movement.

4. A tracking method according to any one of the preceding claims, wherein each marker (22) is positioned in a determined position where there is a marked contrast between the determined position and its surroundings.

5. A tracking method according to any one of the preceding claims, wherein the set of consistency criteria include a maximum movement of the marker (22) between the two images.

6. A tracking method according to any one of the preceding claims, wherein the set of consistency criteria include the directions of movement of at least two markers (22).

7. A tracking method according to any one of the preceding claims, wherein the target is an eye (20) and the determined positions are selected to reflect a lateral and/or rotational movement of the eye.

8. A tracking method according to claim 7 wherein the determined positions include one or more positions on the boundary of the pupil and/or the iris of the eye (20).

9. A tracking method according to claim 7 or 8 wherein the determined positions include at least three positions on the boundary of the pupil or the iris.

10. A tracking method according to any one of the claims 7 - 9, wherein the VR/AR system (1) is arranged to provide a number of light signals to be reflected as glints (24) in the eye (20) and the determined positions include one or more positions of glints.

11. A computer program product comprising a non-transitory storage medium having stored thereon computer readable code means which, when run in a VR/AR system (1) including a tracker function for determining the position of a target, will cause the VR/AR system to perform a method comprising:
obtaining a stream of images of the target,
placing two or more markers (22) in determined positions on the target in the image said markers being arranged to follow the movement of the determined positions,
detecting the movement of the markers between two images in the stream of images,
if the detected movement is within a set of consistency criteria, determining the position of the target based on the detected movement, and
if the detected movement is outside the set of consistency criteria, activating the tracker function.

12. A computer program product according to claim 11, wherein the code means are arranged to cause the detection of movement between two consecutive images in the stream of images.

13. A computer program product according to claim 11 or 12, wherein the code means are arranged to copy the content of a number of pixels adjacent each marker (22) and using said content to detect the movement.

14. A computer program product according to any one of claims 11-13, wherein the code means are arranged to position each marker (22) in a determined position where there is a marked contrast between the determined position and its surroundings.

15. A computer system for generating VR/AR images, comprising a processor and a program memory, said program memory holding a computer program product according to any one of claims 11-14 to be executed in the processor.
